# EUROPÄISCHE PATENTANMELDUNG

(11) **EP 0 625 614 A2**
(43) Veröffentlichungstag der Anmeldung: **23.11.1994**
(21) Anmeldenummer: 94106038.6
(22) Anmeldetag: 19.04.1994
(51) Int. Cl.: E02F 3/38, E02F 3/30, B60P 1/48

(54) **Mehrzweck-Arbeits-Fahrzeug**

(30) Priorität: 15.05.1993 DE 4316364
(71) Anmelder: FAUN GmbH, D-91205 Lauf/Pegnitz (DE)
(72) Erfinder: Krob, Adolf, D-54329 Konz-Niedermenning (DE)
(74) Vertreter: Rau, Manfred, Dr. Dipl.-Ing.

(57) **Zusammenfassung**

Ein Mehrzweck-Arbeits-Fahrzeug weist einen Arbeitsarm (24) auf, der an einer Führungsschiene (25) mittels eines Tragschlittens (27) in Längsrichtung des Fahrzeuges verschiebbar geführt ist. Die Führungsschiene (25) ist seitlich des Fahrerhauses (6) angeordnet und in das Fahrzeug integriert. Der Arbeitsarm (24) ist am Tragschlitten (27) um mehr als 240° schwenkbar gelagert, so daß ein an seinem Ende angebrachtes Arbeits-Gerät (53) vor das Fahrerhaus (6) und hinter das Fahrerhaus (6) geschwenkt werden kann. Das Arbeits-Gerät (53) ist in allen Positionen für den Fahrer gut sichtbar.

## Beschreibung

Die Erfindung betrifft ein Mehrzweck-Arbeits-Fahrzeug nach dem Oberbegriff des Anspruches 1.

Bei einem bekannten Fahrzeug der gattungsgemäßen Art ist der Arbeitsarm hinter dem Fahrerhaus auf dem Fahrzeug-Rahmen dort angeordnet, wo ansonsten eine Ladefläche vorgesehen ist. Der Fahrer kann ein am Arbeitsarm angebrachtes Arbeits-Gerät nur begrenzt während des Arbeitens sehen und muß daher sehr oft aus dem Fahrerhaus aussteigen, um sich von der richtigen Position des Arbeitsgerätes zu überzeugen. Darüber hinaus steht die Ladefläche nicht oder nur begrenzt für Lasten zur Verfügung.

Der Erfindung liegt die Aufgabe zugrunde, ein Mehrzweck-Arbeits-Fahrzeug der gattungsgemäßen Art so auszugestalten, daß das Arbeits-Gerät einen großen Arbeitsbereich hat und der Fahrer das Arbeits-Gerät stets einsehen kann.

Diese Aufgabe wird erfindungsgemäß durch die Merkmale im Kennzeichnungsteil des Anspruches 1 gelöst. Durch die Anordnung der Halterung des Arbeitsarmes an einer Seite des Fahrerhauses und durch dessen Verschwenkbarkeit um mindestens 180° um eine vertikale Achse wird ein außerordentlich großer Arbeitsbereich geschaffen, den der Fahrer stets einsehen kann. Die in der Regel hinter dem Fahrerhaus angeordnete Ladefläche wird bei dieser Anordnung des Arbeitsarmes nicht nennenswert beeinträchtigt.

Insbesondere durch die Ausgestaltung nach Anspruch 2 wird erreicht, daß der Arbeitsbereich des Arbeitsarmes noch drastisch weiter vergrößert wird, da durch diese Ausgestaltung zum einen ermöglicht wird, daß der Arbeitsarm und damit auch das Arbeits-Gerät in den Bereich vor dem Fahrerhaus und hinter dem Fahrerhaus eingeschwenkt werden kann. In allen Arbeitspositionen hat der Bedienungsmann optimale Sichtverhältnisse, d.h. er kann das am Arbeitsarm befindliche Arbeits-Gerät sehen. Dies hat auch zur Folge, daß der im Fahrerhaus sitzende Bedienungsmann in sehr einfacher Weise einen Wechsel von Arbeits-Geräten am Arbeitsarm vornehmen kann, ohne daß er von einem Einweiser abhängig wäre. Andererseits wird bewirkt, daß das Arbeitsgerät auch zusätzlich in Längsrichtung des Fahrzeuges verschoben werden kann. Die vorteilhaften und zum Teil erfinderischen Einzelheiten hierzu ergeben sich aus weiteren Unteransprüchen. Insbesondere durch die weitere vorteilhafte Ausgestaltung nach Anspruch 8, und zwar insbesondere in Verbindung mit Anspruch 2 wird erreicht, daß der Arbeitsarm für die Straßentransportposition - gegebenenfalls mit montiertem Arbeits-Gerät - in der Ausnehmung im Rahmen angeordnet werden kann. Dies führt zu einem tiefen Schwerpunkt des Fahrzeuges insgesamt für Überstellfahrten. Gleichzeitig wird die Sicht für den Fahrer bei Überstellfahrten, d.h. bei normalem Verfahren des Fahrzeuges außerhalb eines Arbeitseinsatzes, nicht beeinträchtigt.

Weitere Merkmale, Einzelheiten und Vorteile der Erfindung ergeben sich aus der nachfolgenden Beschreibung eines Ausführungsbeispieles anhand der Zeichnung. Es zeigt
- Fig. 1: ein Mehrzweck-Arbeits-Fahrzeug in Frontansicht,
- Fig. 2: das Fahrzeug in Seitenansicht mit hochgeschwenktem Arbeitsarm,

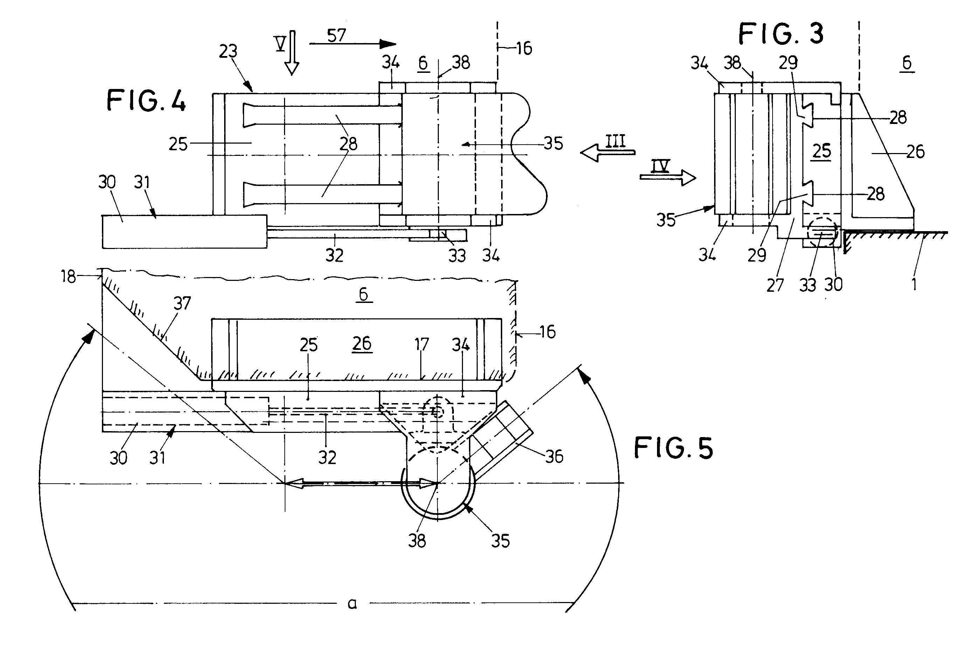

- Fig. 3: eine Halterung des Arbeitsarmes in einer Vorderansicht gemäß dem Sichtpfeil III in Fig. 2 und 4,
- Fig. 4: eine Seitenansicht der Halterung gemäß dem Sichtpfeil IV in Fig. 1 und 3,
- Fig. 5: eine Draufsicht auf die Halterung gemäß dem Sichtpfeil V in den Fig. 3 und 4,
- Fig. 6: das Fahrzeug in Seitenansicht mit in Transportstellung geklapptem Arbeitsarm und auf der Ladefläche abgestelltem Arbeits-Gerät und
- Fig. 7: das Fahrzeug in Seitenansicht mit einem anderen auch beim Transport am Arbeitsarm verbleibenden Arbeits-Gerät.

Bei dem in der Zeichnung dargestellten Fahrzeug handelt es sich um ein Mehrzweck-Arbeits-Fahrzeug, das in üblicher Weise einen Fahrzeug-Rahmen 1 aufweist, der über ein rechtes Vorderrad 2, ein linkes Vorderrad 3 und Hinterräder 4 gegenüber dem Boden 5 abgestützt ist, wo die Räder 2, 3, 4 eine Aufstandsfläche definieren. Die Vorderräder 2, 3 sind lenkbar. Die Hinterräder 4 werden von einem nicht dargestellten Motor angetrieben. Der Rahmen 1 trägt oberhalb der Vorderräder 2, 3 ein Fahrerhaus 6 und in seinem mittleren und hinteren Bereich eine kastenförmige Ladefläche 7. An einem mit dem Rahmen 1 verbundenen vorderen Stoßfänger 8 ist ein Adaptionsschild 9 zur Anbringung von nicht dargestellten Front-Arbeitsgeräten angebracht. In diesem Bereich sind auch vordere Abstützarme 11 angebracht, von denen nur einer dargestellt ist. Diese Abstützarme 11 können mittels eines, durch einen hydraulisch beaufschlagbaren Kolben-Zylinder-Antrieb 12 gebildeten Abstütz-Antriebs nach unten ausgefahren werden, so daß sie sich gegenüber dem Boden 5 abstützen, wodurch das Fahrzeug in einer Arbeitsposition fest gegenüber dem Boden 5 verankert wird. Dies gilt entsprechend für weitere vorhandene nicht dargestellte Abstützarme 11.

Im Fahrerhaus 6 sind ein Sitz 13 für den Fahrer und vor dem Sitz 13 ein Lenkrad 14 zur Lenkung der Vorderräder 2, 3 angeordnet. Wie die Zeichnungen erkennen lassen, ist das Fahrerhaus 6 im wesentlichen gestellartig ausgebildet, d.h. es besteht überwiegend aus Holmen 15, zwischen denen großflächige Fenster angeordnet und gehalten sind, so daß die Frontwand 16 im wesentlichen durch ein Frontfenster 16a, die rechte Seitenwand 17 im wesentlichen durch ein rechtes Seitenfenster 17a und die Rückwand 18 und die linke Seitenwand 19 ebenfalls im wesentlichen durch in der Zeichnung nicht dargestellte Fenster gebildet werden. In der linken Seitenwand 19 ist eine ebenfalls nicht dargestellte Tür angeordnet.

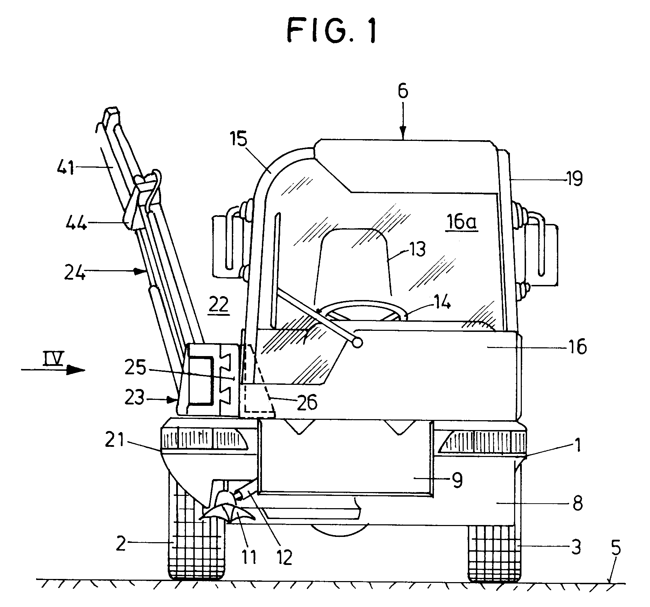

Das Fahrerhaus 6 ist unsymmetrisch auf dem Rahmen 1 angeordnet, d.h. es erstreckt sich auf einer - der linken - Seite bis zur zugeordneten - linken - Seite des Rahmens 1. Auf der anderen - rechten - Seite ist das Fahrerhaus 6 gegenüber der zugeordneten - rechten - Seite 21 des Rahmens 1 gegenüber diesem nach innen versetzt. Wie Fig. 1 erkennen läßt, erstreckt sich das Fahrerhaus 6 auf der linken Seite bis über das linke Vorderrad 3, während das Fahrerhaus 6 auf der rechten Seite das zugeordnete rechte Vorderrad 2 nicht überdeckt. In dem auf der rechten Seite 21 über dem Rahmen 1 neben dem Fahrerhaus 6 gebildeten Freiraum 22 ist eine Halterung 23 für einen Arbeitsarm 24 vorgesehen. Die Halterung 23 weist eine Führungsschiene 25 auf, die sich längs der rechten Seitenwand 17 des Fahrerhauses 6 von dessen Frontwand 16 bis zu dessen Rückwand 18 erstreckt und zwar unterhalb des Sitzes 13 für den Fahrer. Die Führungsschiene 25 ist mit ihrer dem Fahrerhaus 6 zugewandten Seite an einer winkelförmigen Konsole 26 mittels Schrauben oder durch Schweißen angebracht. Die Konsole 26 wiederum ist in gleicher Weise am Rahmen 1 befestigt. An der dem Fahrerhaus 6 abgewandten Außenseite der Führungsschiene 25 ist an dieser ein Tragschlitten 27 verschiebbar geführt. Die Führungsschiene 25 weist hierzu zwei übereinander angeordnete, parallel zueinander verlaufende, sich im wesentlichen über die volle Länge der Führungsschiene 25 erstreckende schwalbenschwanzförmig hinterschnittene Führungsnuten 28 auf, in denen im Querschnitt angepaßte Führungsstege 29 des Tragschlittens 27 angeordnet sind. Da die Führungsnuten 28 zumindest zu einem Ende hin nach außen offen sind, kann der Tragschlitten 27 in einfacher Weise durch Einstecken von dieser Seite her auf die Führungsschiene 25 montiert werden. An der Unterseite der Führungsschiene 25 und zwar in deren hinterem Bereich ist ein Zylinder 30 eines hydraulisch beaufschlagbaren linearwirkenden Verschiebe-Antriebs 31 angebracht, dessen Kolbenstange 32 an der Unterseite des Tragschlittens 27 mittels eines Gelenks 33 befestigt ist. Mittels dieses Verschiebe-Antriebes 31 kann der Tragschlitten 27 über die volle Länge des Fahrerhauses 6 auf der Führungsschiene 25 verschoben werden.

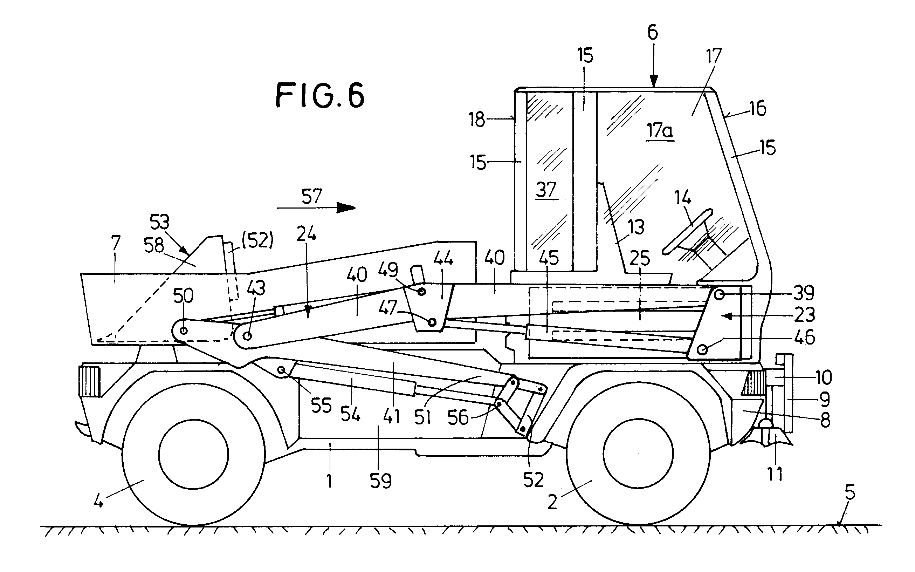

Der Tragschlitten 27 weist auf der dem Fahrerhaus 6 abgewandten Seite zwei horizontal und parallel zueinander verlaufende Wangen 34 auf, zwischen denen ein hydraulisch beaufschlagbarer Dreh-Antrieb 35 gelagert ist, an dem eine Aufnahme 36 für den Arbeitsarm 24 angebracht ist. Wie Fig. 5 erkennen läßt, kann diese Aufnahme 36 mittels des Antriebs 35 um einen Schwenkwinkel a von etwa 250° verschwenkt werden. Wenn der Tragschlitten 27 bis zur Frontwand 16 des Fahrerhauses 6 verschoben ist, wenn also die Kolbentange 32 des Antriebs 31 vollständig ausgefahren ist, dann kann die Aufnahme 36 in die in Fig. 5 rechts dargestellte Stellung verschwenkt werden, in der sie vor das Fahrerhaus 6 ragt. Wenn die Kolbenstange 32 vollständig eingefahren wird, wenn also der Tragschlitten 27 sich in seiner hinteren Stellung im Bereich der Rückwand 18 des Fahrerhauses 6 befindet, dann kann die Aufnahme 36 in eine schräg hinter die Rückwand 18 zeigende Stellung verschwenkt werden. Damit in diesem Bereich das Fahrerhaus 6 kein Hindernis bildet, weist die rechte Seitenwand 17 am Übergang zur Rückwand 18 einen abgeschrägten Wandbereich 37 auf. Wie insbesondere aus Fig. 5 erkennbar wird, kann die Aufnahme 36 auch im mittleren Bereich der Führungsschiene 25 Schwenkbewegungen um die zur Aufstandsfläche (Boden 5) senkrechte Drehachse 38 des Dreh-Antriebes 35 von etwas mehr als 180° ausführen.

In der Aufnahme 36 ist der Arbeitsarm 24 angelenkt. Er besteht aus einem an der Aufnahme 36 um ein Schwenkgelenk 39 angelenkten Innenarm 40 und einem Außenarm 41, der am äußeren Ende 42 des Innenarmes 40 mittels eines Schwenkgelenks 43 angelenkt ist. In einem mittleren Bereich des Innenarmes 40 ist eine Konsole 44 angebracht, an der ein Schwenkantrieb 45 für den Innenarm 40 angreift. Dieser besteht aus einem hydraulisch beaufschlagbaren Kolben-Zylinder-Antrieb 12, der einerseits mittels einer Anlenkung 46 an der Aufnahme 36 und andererseits an einer Anlenkung 47 an der Konsole 44 angelenkt ist. Es ist weiterhin ein Schwenkantrieb 48 für den Außenarm 41 vorgesehen, der ebenfalls aus einem hydraulisch beaufschlagbaren Kolben-Zylinder-Antrieb 12 besteht und der einerseits an der Konsole 44 und andererseits am Außenarm 41 jeweils mit einer Anlenkung 49, 50 befestigt ist. Am äußeren freien Ende 51 des Außenarmes 41 ist eine Aufnahme 52 für ein Arbeits-Gerät 53, beispielsweise eine Schaufel, schwenkbar angebracht. Die Aufnahme 52 und damit auch das Arbeits-Gerät 53 sind mittels eines Werkzeug-Schwenkantriebes 54 schwenkbar, bei dem es sich ebenfalls um einen hydraulisch beaufschlagbaren Kolben-Zylinder-Antrieb 12 handelt, der zum einen mit dem Außenarm 41 und zwar in der Nähe des Schwenkgelenks 43 und zum anderen mit der Aufnahme 52 jeweils mittels einer Anlenkung 55 bzw. 56 verbunden ist.

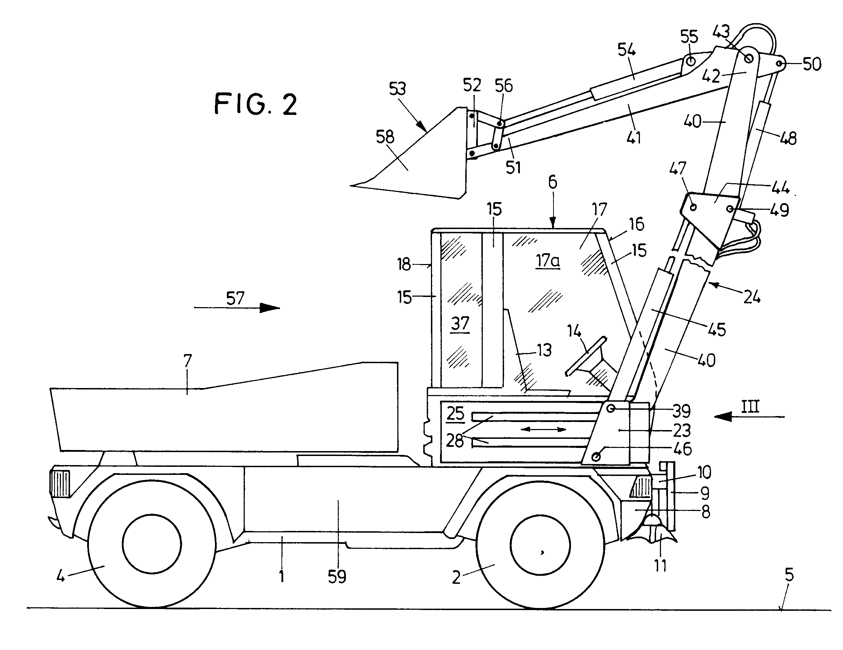

Durch Betätigung des Schwenkantriebes 45 kann der Innenarm 40 gehoben bzw. gesenkt werden. Durch Betätigung des Schwenkantriebes 48 kann die Stellung des Außenarmes 41 relativ zum Innenarm 40 verändert werden. Durch Betätigung des Werkzeug-Schwenkantriebes 54 kann die Stellung der Aufnahme 52 und damit die Stellung des Arbeits-Gerätes 53 relativ zum Außenarm 41 verändert werden. Damit ist es möglich, mit dem Arbeits-Gerät 53 am Boden zu arbeiten oder Lasten, beispielsweise Erde, vom Boden aufzuheben. Wenn als Arbeits-Gerät 53 ein Hubkorb angeordnet ist, dann kann dieser vom Boden 5 bis in jede Stellung verschwenkt werden, die durch die Verschwenkung der Schwenkantriebe 45, 48 und 54 und die Beaufschlagung des Dreh-Antriebes 35 erreichbar ist. Es sei darauf hingewiesen, daß der Arbeitsarm in der in den Fig. 1 und 2 dargestellten Position mittels des Dreh-Antriebes 35 entgegen der in Fig. 5 gezeigten Stellung der Aufnahme 36 nach hinten zur Führungsschiene 25 hin verschwenkt ist. Wenn der Arbeitsarm 24 eine der Stellung der Aufnahme 36 in Fig. 5 entsprechende Position einnimmt, dann ragt der Außenarm 41 mit dem Arbeits-Gerät 53 in Fahrtrichtung 57 vor das Fahrzeug. Die Fahrtrichtung 57 entspricht der Längsrichtung des Fahrzeuges.

Fig. 6 zeigt, daß das Arbeits-Gerät 53, und zwar im vorliegenden Fall die erwähnte Schaufel 58 zum Straßentransport auf der Ladefläche 7 abgelegt werden kann. Der Außenarm 41 wird an den Innenarm 40 angeschwenkt und dann der gesamte Arbeitsarm 24 mittels des Dreh-Antriebs 35 in eine horizontale Stellung entgegen der Fahrtrichtung 57 gebracht, wobei der Außenarm 41 unter den Innenarm 40 kommt. Der Außenarm 41 gelangt - insbesondere im Bereich seines äußeren freien Endes 51 - in eine Ausnehmung 59 im Fahrzeug-Rahmen 1 zwischen dem rechten Vorderrad 2 und dem zugeordneten Hinterrad 4. Der Tragschlitten 27 befindet sich hierbei in seiner - bezogen auf die Fahrtrichtung 57 - vorderen Stellung.

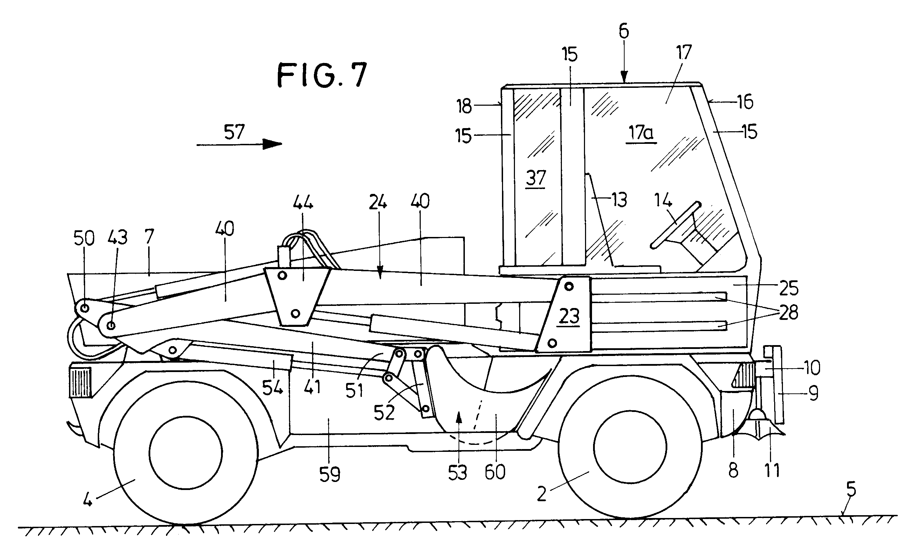

Wenn als Arbeits-Gerät 53 ein Grablöffel 60 eingesetzt wird, der zum Ausheben relativ schmaler Gräben von 30 bis 50 cm Breite dient, dann kann dieser Grablöffel 60 - wie aus Fig. 7 hervorgeht - auch in der Transportstellung des Arbeitsarmes 24 an der Aufnahme 52 angebracht bleiben. Der Tragschlitten 27 wird in diesem Fall mit dem Arbeitsarm 24 entgegen der Fahrtrichtung 57 des Fahrzeuges weiter nach hinten verschoben, so daß in der Ausnehmung 59 auch Platz für den Grablöffel 60 ist.

Aufgrund der geschilderten Ausgestaltung hat der Fahrer stets eine gute Sicht auf die Arbeits-Geräte 53 und zwar in all deren Stellungen vor, neben und hinter dem Fahrerhaus 6. Damit auch bei unterschiedlichen Lasten eine hohe Fahrstabilität und eine gute Geländegängigkeit möglich ist, weist das Fahrzeug eine hydropneumatische Federung mit Niveauregulierung auf, die bekannt ist und deshalb nicht dargestellt ist. Durch eine solche Niveauregulierung ist es auch in einfacher Weise möglich, Front-Arbeitsgeräte am Adaptionsschild 9 zu montieren oder zu demontieren. Entsprechendes gilt für andere nicht angedeutete Adaptionsschilde oder dergleichen. Eine solche Niveauregulierung hat darüber hinaus selbstverständlich auch weitere Vorteile für den Einsatz des Fahrzeuges.

## Patentansprüche

1. Mehrzweck-Arbeits-Fahrzeug mit einem mittels eine Aufstandfläche definierenden Rädern (2, 3, 4) gegenüber dem Boden (5) abstützbaren Fahrzeug-Rahmen (1), mit einem sich über einen Teil des Rahmens (1) erstreckenden Fahrerhaus (6) und mit einem mittels Schwenkantrieben (45, 48, 54) schwenkbewegbaren Arbeitsarm (24), an dessen äußerem freien Ende (51) ein Arbeits-Gerät (53) anbringbar ist, dadurch gekennzeichnet, daß der Arbeitsarm (24) im Bereich einer Seitenwand (17) des Fahrerhaus (6) mit dem Fahrzeug mittels einer Halterung (23) verbunden und mittels eines Dreh-Antriebs (35) um eine zur Aufstandsfläche (Boden 5) senkrechte Drehachse (38) um mindestens 180° aus einer in Fahrtrichtung (57) des Fahrzeugs gerichteten Stellung in eine entgegen der Fahrtrichtung (57) gerichtete Stellung schwenkbar ist.

2. Fahrzeug nach Anspruch 1, dadurch gekennzeichnet, daß die Halterung (23) eine längs des Fahrerhauses (6) im wesentlichen in Fahrtrichtung (57) des Fahrzeuges verlaufende Führungsschiene (25) und einen auf dieser in Fahrtrichtung (57) verschiebbar geführten Tragschlitten (27) aufweist, an dem der Arbeitsarm (24) um die Drehachse (38) schwenkbar gelagert ist.

3. Fahrzeug nach Anspruch 2, dadurch gekennzeichnet, daß der Arbeitsarm (24) an dem Tragschlitten (27) um mehr als 240° schwenkbar gelagert ist.

4. Fahrzeug nach Anspruch 3, dadurch gekennzeichnet, daß der Arbeitsarm (24) vor die Frontwand (16) und hinter die Rückwand (18) des Fahrerhauses (6) schwenkbar ist.

5. Fahrzeug nach einem der Ansprüche 2 bis 4, dadurch gekennzeichnet, daß der Arbeitsarm (24) mittels des Dreh-Antriebs (35) am Tragschlitten (27) gelagert ist.

6. Fahrzeug nach einem der Ansprüche 2 bis 5, dadurch gekennzeichnet, daß am Tragschlitten (27) ein Verschiebe-Antrieb (31) angreift.

7. Fahrzeug nach einem der Ansprüche 2 bis 6, dadurch gekennzeichnet, daß die Führungsschiene (25) in einem Freiraum (22) seitlich des Fahrerhauses (6) und oberhalb eines Vorderrades (2) angeordnet ist.

8. Fahrzeug nach einem der Ansprüche 2 bis 7, dadurch gekennzeichnet, daß in Fahrtrichtung (57) etwa mit der Führungsschiene (25) fluchtend eine Ausnehmung (59) im Rahmen (1) ausgebildet ist, in die der Arbeitsarm (24) mindestens teilweise einschwenkbar ist.
